# EUROPÄISCHE PATENTSCHRIFT

(11) **EP 0 550 795 B1**
(45) Veröffentlichungstag und Bekanntmachung des Hinweises auf die Patenterteilung: **24.07.1996**
(21) Anmeldenummer: 92115959.6
(22) Anmeldetag: 17.09.1992
(51) Int. Cl.: E05B 71/00

(54) **Rahmenschloss für Fahrzeuge, insbesondere für Zweiradfahrzeuge**
Lock for the frame of vehicles, especially for two wheel vehicles
Serrure d'encerclement pour véhicules, notamment pour véhicules à deux roues

(30) Priorität: 10.01.1992 DE 4200453
(43) Veröffentlichungstag der Anmeldung: 14.07.1993
(73) Patentinhaber: Aug. Winkhaus GmbH & Co. KG, D-48291 Telgte (DE)
(72) Erfinder: Kortenbrede, Ludger, W-4404 Telgte/Westfalen (DE); Knabel, Walter, Singapore 1025 (SG); Chin, Loon Kam, Singapore 2056 (SG)
(74) Vertreter: Weickmann, Heinrich, Dipl.-Ing.

(56) Entgegenhaltungen:
- EP-A- 0 077 421
- DE-A- 2 739 983
- DE-C- 2 519 068
- US-A- 4 033 160
- US-A- 4 840 048
- US-A- 5 007 257

## Beschreibung

Die Erfindung betrifft ein Rahmenschloß für Fahrzeuge, insbesondere Zweiradfahrzeuge, mit einem in der Ansicht teilringförmigen Schloßkasten und einem in dem Schloßkasten verschiebbaren, ebenfalls teilringförmigen Bügel, welcher in einer Freigabestellung im wesentlichen innerhalb des Schloßkastens liegt und in einer Absperrstellung die Schloßkastenenden überbrückt, wobei in dem Schloßkasten neben dem Bügel ein Schließwerk untergebracht ist, welches in Absperrstellung des Bügels mit einem Sperreingriff des Bügels diesen sperrend zusammenwirkt, und wobei der Schloßkasten durch zwei in Richtung der Teilringachse aneinander anschließende teilringförmige Kastenteile gebildet ist, welche zwischen sich eine Schließwerkskammer und anschließend an diese Schließwerkskammer gekrümmte Führungskanäle für den Bügel begrenzen.

Ein solches Rahmenschloß wird im Falle eines Fahrrads regelmäßig an der Hinterradgabel des Fahrrads oberhalb des Hinterrads befestigt und umgreift teilweise die Felge des Hinterrads, so daß der Bügel durch die Radspeichen hindurch in Absperrstellung gebracht werden kann.

Rahmenschlösser der eingangs genannten Bauart sind beispielsweise aus der DE-PS 25 15 068 bekannt. Die bei dieser Ausführungsform durch das Zusammenwirken des Schließwerks mit dem Sperreingriff des Bügels erreichte Sicherheit ist in vielen Fällen ausreichend. Bei gewaltsamen Aufbruchsversuchen mit hohen radial auswärts gerichteten Belastungen kann die gebotene Sicherheit jedoch unter Umständen nicht mehr ausreichend sein.

Der Erfindung liegt demgemäß die Aufgabe zugrunde, bei einem gattungsgemäßen Rahmenschloß die Aufbruchssicherheit weiter zu erhöhen.

Zur Lösung dieser Aufgabe ist erfindungsgemäß vorgesehen, daß an einem bei der Überführung in die Absperrstellung vorlaufenden Endabschnitt des teilringförmigen Bügels einerseits und dem diesen Endabschnitt in der Absperrstellung aufnehmenden Führungskanal andererseits Eingriffsformationen angeordnet sind, welche bei normaler Bewegung des Bügels zwischen Absperrstellung und Freigabestellung ungehindert aneinander vorbeigehen, im Falle einer äußeren Belastung des in Absperrzustand befindlichen Rahmenschlosses jedoch derart in Eingriff treten, daß sie einem Ausziehen des Endabschnitts aus dem ihn aufnehmenden Führungskanal entgegenwirken.

Wenn diese Eingriffsformationen miteinander in Eingriff treten, so bildet sich zwischen dem Endabschnitt des Bügels und dem diesen Endabschnitt in der Absperrstellung aufnehmenden Führungskanal eine Formschlußverbindung, die ein Ausziehen des Bügels aus dem Führungskanal unmöglich macht, insbesondere dann, wenn versucht wird, den Bügel zwischen den einander gegenüberliegenden Enden der Führungskanäle radial auswärts zu bewegen oder mit einer radial auswärts gerichteten Kraftkomponente aus dem den Endabschnitt aufnehmenden Führungskanal zurückzuziehen.

Eine besonders wirksame Formschlußverbindung zwischen dem Endabschnitt des Bügels und dem ihn in der Absperrstellung aufnehmenden Führungskanal wird im Hinblick auf die bei gewaltsamen Öffnungsversuchen üblicherweise und am leichtesten anlegbaren Belastungen dann erreicht, wenn die Eingriffsformationen einerseits an der radial äußeren Seite des Endabschnitts und andererseits an einer radial äußeren Begrenzungswand des Führungskanals angeordnet sind.

Eine fertigungstechnisch günstige Ausgestaltung ergibt sich dann, wenn eine bügelseitige Eingriffsformation von einem nach radial außen vorspringenden Nocken am Endabschnitt des Bügels und eine führungskanalseitige Eingriffsformation von einer Nockeneingriffskante gebildet ist. Es ist beispielsweise möglich, daß der nach radial außen vorspringende Nocken durch eine Sägezahnausnehmung in dem Bügelendabschnitt gebildet ist.

Weiterhin ist es denkbar, daß die Nockeneingriffskante durch eine den Nocken unter Belastung aufnehmende Senke an der Innenseite der radial äußeren Begrenzungswand gebildet ist.

Um die führungskanalseitige Eingriffsformation unabhängig von der verfügbaren normalen Wandstärke des führungskanalbildenden Materials möglichst kräftig und widerstandsfähig zu gestalten, ist vorgesehen, daß eine führungskanalseitige Eingriffsformation an einem Überbrückungselement ausgebildet ist, welches sich zwischen der radial äußeren Begrenzungswand und einer radial inneren Begrenzungswand des Führungskanals erstreckt und an dem Führungskanal zumindest in dessen Umfangsrichtung festgelegt ist.

Das Überbrückungselement kann gleichzeitig eine Verankerungsstelle für eine den Bügel in die Freigabestellung vorspannende Schraubendruckfeder aufweisen. Das Überbrückungselement ist zur Verstärkung des Führungskanals an seinem für den Eintritt des Bügelendabschnitts ausgebildeten Ende und/oder für eine zusätzliche Führung des Bügelendabschnitts an dieser Stelle an sich vorteilhaft, gleichgültig, ob es die eine oder andere zusätzliche Funktion, d.h. die Bildung einer Eingriffsformation oder die Bereitstellung einer Verankerung für die Schraubendruckfeder, übernimmt.

Wenn bei dem Rahmenschloß von den teilringförmigen Kastenteilen der eine mit Führungsrinnen ausgebildet und der andere als diese Führungsrinnen überdeckender Deckelteil ausgebildet ist, derart, daß die Führungsrinnen und der Deckelteil zusammen die Führungskanäle bilden, kann die Aufbruchssicherheit weiter dadurch erhöht werden, daß an dem Bügel im Bereich eines auswärts abstehenden und einen Schlitz des einen Führungskanals durchsetzenden Handgriffs, welcher längs dieses Schlitzes beweglich ist und in der Absperrstellung des Bügels nahe einem freien Ende des betreffenden Führungskanals liegt, Verhakungsmittel angebracht sind, welche in der Absperrstellung des Bügels mit Gegenverhakungsmitteln des Deckelteils in Eingriff stehen und einem Abheben des Deckelteils von der zugehörigen Führungsrinne entgegenwirken.

Diese Ausgestaltung ist gerade dann von besonderer Bedeutung, wenn keine Endwände vorhanden sind, die die Führungskanäle an den Schloßkastenenden zumindest teilweise abdecken und Bügeldurchgangsöffnungen aufweisen. Der Bügel sollte jedenfalls dann, wenn die Verhakungsmittel und die Gegenverhakungsmittel miteinander in Eingriff stehen, in der Nähe der Verhakungsmittel gegen Ausheben aus der Führungsrinne gesichert sein.

Die Sicherung gegen Ausheben des Bügels aus der Führungsrinne kann darauf beruhen, daß die Verhakungsmittel des Bügels eine Eindrückung der Führungsrinne untergreifen.

Eine besonders wirksame Sicherungskonstruktion ergibt sich dadurch, daß die Eindrückung eine Durchstecklasche für die Gegenverhakungsmittel des Deckelteils bildet.

Wenn das Rahmenschloß wie folgt aufgebaut ist:
a) der Schloßkasten umfaßt einen Hohlkastenteil und einen Deckelteil;
b) der Hohlkastenteil weist in seinem Scheitelbereich eine Schließwerkskammer zur Aufnahme des Schließwerks auf und anschließend an diese Schließwerkskammer gebogene Führungsrinnen zur Aufnahme des verschiebbaren Bügels, wobei
c) der Hohlkastenteil im wesentlichen begrenzt ist durch eine Bodenwand, eine in bezug auf den Krümmungsmittelpunkt der Teilringform radial innere Begrenzungswand und eine in bezug auf diesen Krümmungsmittelpunkt radial äußere Begrenzungswand und wobei
d) die Schließwerkskammer im Scheitelbereich zwischen der radial inneren Begrenzungswand und der radial äußeren Begrenzungswand über der Bodenwand ausgebildet ist und die Führungsrinnen ebenfalls zwischen der radial inneren Begrenzungswand und der radial äußeren Begrenzungswand über der Bodenwand ausgebildet sind;
e) der Deckelteil deckt die Schließwerkskammer und die Führungsrinnen ab;
f) zwischen der radial inneren Begrenzungswand und dem Schließmechanismus ist ein schließwerknaher Führungskanal für den Bügel gebildet,

so besteht die Forderung, daß der in der Absperrstellung von dem Bügel geräumte Führungskanal und auch der dem Schließwerk nahegelegene Führungskanal gegen Ansägen gesichert werden. Dies kann auf eine besonders vorteilhafte, fertigungstechnisch einfache Weise dadurch gewährleistet werden, daß der in der Absperrstellung von dem Bügel geräumte Führungskanal und der daran anschließende schließwerknahe Führungskanal durch eine einstückig zusammenhängende, annähernd teilringförmige Sägeschutzplatte mindestens teilweise abgedeckt sind, welche der Innenseite des Deckelteils benachbart ist. Bei dieser Ausführungsform ist damit der schließwerknahe Führungskanal unabhängig von einer etwaigen bevorzugterweise ebenfalls vorhandenen Panzerung des Schließwerks gepanzert, ohne daß die Teilezahl erhöht wird.

Dabei kann ein schließwerknahes Ende der Sägeschutzplatte als Anschlag für einen mit dem Bügel verbundenen, aus dem Schloßkasten durch einen Schlitz herausgeführten Handgriff ausgebildet sein, welcher die Freigabestellung des Bügels festlegt.

Wenn der Schloßkasten wie folgt aufgebaut ist:
a) der Schloßkasten umfaßt einen Hohlkastenteil und einen Deckelteil;
b) der Hohlkastenteil weist in seinem Scheitelbereich eine Schließwerkskammer zur Aufnahme des Schließwerks auf und anschließend an diese Schließwerkskammer gebogene Führungsrinnen zur Aufnahme des verschiebbaren Bügels, wobei
c) der Hohlkastenteil im wesentlichen begrenzt ist durch eine Bodenwand, eine in bezug auf den Krümmungsmittelpunkt der Teilringform radial innere Begrenzungswand und eine in bezug auf diesen Krümmungsmittelpunkt radial äußere Begrenzungswand und wobei
d) die Schließwerkskammer im Scheitelbereich zwischen der radial inneren Begrenzungswand und der radial äußeren Begrenzungswand über der Bodenwand ausgebildet ist und die Führungsrinnen ebenfalls zwischen der radial inneren Begrenzungswand und der radial äußeren Begrenzungswand über der Bodenwand ausgebildet sind;
e) der Deckelteil deckt die Schließwerkskammer und die Führungsrinnen ab;
f) im Übergangsbereich zwischen der den Bügel in der Freigabestellung aufnehmenden Führungsrinne und der Schließwerkskammer ist ein sich zu der Schließwerkskammer hin erweiternder Freiraum zwischen dem Bügel und der radial äußeren Begrenzungswand gebildet;
g) dieser Freiraum grenzt an einen Schlitz an, welcher dem Durchtritt eines mit dem Bügel verbundenen Handgriffs dient,
ist es nicht auszuschließen, daß ein Unbefugter mit einem spitzen Werkzeug, etwa einem Schraubenzieher, durch den Schlitz in den Freiraum eingreift und den Bügel zu untergreifen versucht. Um auch eine solche Manipulation zu erschweren und damit die Sicherheit weiter zu erhöhen, ist vorgesehen, daß der Freiraum durch ein Formstück wenigstens teilweise derart ausgefüllt ist, daß ein Untergreifen des Bügels durch ein von dem Schlitz her in den Freiraum eingeführtes Werkzeug erschwert ist.

In Weiterbildung der Erfindung können an den Schloßkastenenden die Führungskanäle durch Endwände mindestens teilweise abgedeckt sein, wobei die Endwände Durchgangsöffnungen für den Bügel aufweisen. Derartige Endwände sind an sich bereits aus der eingangs genannten DE-PS 25 19 068 bekannt. Dort werden Endkappen auf die Schloßkastenenden aufgeschoben und fixiert. Die Endkappen besitzen einen Kappenmantel, welcher die Schloßkastenenden eng umschließt, und Endwände mit Durchgangsöffnungen, durch welche der Bügel hindurchgeht. Sie können bereits die Funktionen erfüllen, als Schutz vor Trennung der Schloßkastenteile zu dienen und die stumpfen Schloßkastenenden zu verdecken. Eine sicherheitstechnische, fertigungstechnische und das Erscheinungsbild fördernde Verbesserung der Endkappen kann bei der Erfindung dadurch erreicht werden, daß die Endwände einstückig mit mindestens einem der Kastenteile ausgeführt sind.

Durch die einstückige Ausbildung der Schloßkastenendwände mit einem der Schloßkastenteile wird die Notwendigkeit von Endkappen vermieden. Dadurch entfällt in der Fertigung die Notwendigkeit der gesonderten Herstellung von Endkappen und die Notwendigkeit der Montage dieser Endkappen auf den Schloßkastenenden. Gleichzeitig wird der Schloßkasten in seinem Erscheinungsbild geschlossener und glatter und es entfallen Kanten an den Enden der Endkappen, welche bei Berührung zu Schmerz und Verletzung führen können. Stumpfe offene Enden des Schloßkastens sind weiterhin vermieden. Die Durchgänge in den Endwänden können wie bisher eng an den Querschnitt - in der Regel Rundquerschnitt - des Bügels angepaßt werden. Die mit dem Schloßkasten einstückigen Endwände erlauben eine perfekte Ausrichtung der Durchgangsöffnungen auf den jeweiligen Führungsverlauf des Bügels innerhalb des Schloßkastens, so daß eine leichtgängige Bügelführung gewährleistet ist und schon eine relativ schwache und leicht überwindbare Rückstellfeder zu einer zuverlässigen Rückführung des Bügels in Freigabestellung führt, wenn das Schließwerk durch Schlüsselbetätigung oder Schließgeheimniseinstellung gelöst wird.

Das bzw. die mit den Endwänden bzw. Endwandteilen versehene Schloßkastenteil bzw. Schloßkastenteile kann bzw. können in einem Arbeitsgang durch Stanzen und gegebenenfalls Tiefziehen hergestellt werden. Die Endwände bzw. die Endwandteile schaffen die Voraussetzung für zuverlässige Verbindung der Schloßkastenteile im Bereich der Schloßkastenenden.

Eine bevorzugte Ausführungsform der Erfindung baut auf auf einem Rahmenschloß, bei welchem der Schloßkasten wie folgt aufgebaut ist:
a) der Schloßkasten umfaßt einen Hohlkastenteil und einen Deckelteil;
b) der Hohlkastenteil weist in seinem Scheitelbereich eine Schließwerkskammer zur Aufnahme des Schließwerks auf und anschließend an diese Schließwerkskammer gebogene Führungsrinnen zur Aufnahme des verschiebbaren Bügels, wobei
c) der Hohlkastenteil im wesentlichen begrenzt ist durch eine Bodenwand, eine in bezug auf den Krümmungsmittelpunkt der Teilringform radial innere Begrenzungswand und eine in bezug auf diesen Krümmungsmittelpunkt radial äußere Begrenzungswand und wobei
d) die Schließwerkskammer im Scheitelbereich zwischen der radial inneren Begrenzungswand und der radial äußeren Begrenzungswand über der Bodenwand ausgebildet ist und die Führungsrinnen ebenfalls zwischen der radial inneren Begrenzungswand und der radial äußeren Begrenzungswand über der Bodenwand ausgebildet sind;
e) der Deckelteil deckt die Schließwerkskammer und die Führungsrinnen ab,

Bei dieser Ausführungsform können an den Schloßkastenenden Endwände aus dem Material des Hohlkastenteils gebildet sein. Der Bügel ist dann an den beiden Schloßkastenenden in Absperrstellung von dem Material des Hohlkastenteils voll umschlossen, was einen besonderen Sicherheitswert insofern hat, als der Bügel auch nicht mit roher Gewalt in Richtung der Teilringachse aus dem Hohlkastenteil herausgebrochen werden kann.

Ein weiterer Vorteil ergibt sich dann, wenn die aus dem Material des Hohlkastenteils gebildeten Endwände materialschlüssig mit der Bodenwand sowie mit der radial inneren und der radial äußeren Begrenzungswand zusammenhängen. Eine solche Ausführungsform ist im Hinblick auf die Festigkeit des Hohlkastenteils und damit wiederum auf die Sicherheitsfunktion von besonderem Wert. Herstellungstechnisch läßt sich ein Hohlkastenteil dieser Bauart auf einfache Weise entweder durch Stanzen und Tiefziehen von Blechzuschnitten oder auch durch Ausformen von flüssigen oder pulverförmigen Formmassen gewinnen, z.B. im Zinkdruckguß-Verfahren. Die Durchgangsöffnungen lassen sich dabei nachträglich durch Bohren oder gegebenenfalls mehrstufiges Stanzen gewinnen.

Ein optimaler Abschluß an den Enden des Schloßkastens läßt sich dadurch gewinnen, daß sich die Endwände im wesentlichen über die volle Rinnenhöhe erstrecken.

Die Bügeldurchgangsöffnungen werden bevorzugt sehr eng an den Querschnitt des Bügels angepaßt, damit ein Dieb keine Gelegenheit findet, mit einem spitzen Instrument in die Bügeldurchgangsöffnungen neben dem Bügel einzudringen und dadurch das Schloß aufzusprengen. Um gleichwohl ein unbehindertes Einfahren des Bügels in die Durchgangsöffnung zum Zwecke des Absperrens sicherzustellen, wird vorgeschlagen, daß die Bügeldurchgangsöffnung zumindest derjenigen Endwand, von welcher der Bügel in der Freigabestellung zurückgezogen ist, eine konische Einführungsfläche für das Vorlaufende des in die Absperrstellung übergehenden Bügels aufweist. Dabei wird vorausgesetzt, daß der Bügel in der Freigabestellung immer noch aus der anderen Durchgangsöffnung herausschaut, so daß die Notwendigkeit eines Einfädelns des Bügels in diese andere Durchgangsöffnung nicht besteht.

Eine einfache Möglichkeit zur Herstellung einer perfekten Einweisefläche besteht darin, daß die Einführungsfläche durch einen in das Schloßkasteninnere hineinspringenden Einweisungstrichter gebildet ist, welcher einstückig an der jeweiligen Endwand angeformt ist. Ein solcher Einführungstrichter läßt sich auf einfache Weise im Zusammenhang mit dem Bohren oder Stanzen der Durchgangsöffnung gewinnen, insbesondere durch zweistufiges Stanzen.

Zur Erhöhung der Aufbruchsicherheit im Bereich der Schloßkastenenden wird vorgeschlagen, daß innerhalb des Schloßkastens nahe mindestens einer Endwand ein gegebenenfalls zusätzlicher Führung des Bügels dienendes radiales Überbrückungselement vorgesehen ist.

Dieses Überbrückungselement kann in mehrfacher Hinsicht sicherheitsfördernd sein. Zum einen kann es als Widerlager für den Deckelteil dienen, welches das Abheben des Deckelteils vom Hohlkastenteil erschwert. Zum anderen kann es als Spreitzsicherung dienen, welche das Abspreitzen der radial inneren und der radial äußeren Begrenzungswand voneinander erschwert. Dieses radiale Überbrückungselement kann unter Verwendung von Verbindungsmitteln fixiert sein, welche der Verbindung der beiden Schloßkastenteile dienen.

Bei der oben angesprochenen bevorzugten Ausführungsform, bei welcher der Schloßkasten von einem Hohlkastenteil und einem Deckelteil gebildet ist, ist es insbesondere möglich, daß als radiales Überbrückungselement eine entsprechend dem Bügelquerschnitt von der Bodenwand beabstandete Überbrückungslasche vorgesehen ist, welche sich von der radial äußeren Begrenzungswand zur radial inneren Begrenzungswand erstreckt. Dabei kann den räumlichen Verhältnissen besonders gut dadurch Rechnung getragen werden, daß die Überbrückungslasche einen radial äußeren Stecklappen aufweist, welcher von einem Steckschlitz der radial äußeren Begrenzungswand aufgenommen ist und eine radial innere Befestigungsöse, welche auf einem zur Bodenwand im wesentlichen parallelen Stufenplateau der radial inneren Begrenzungswand aufliegend zwischen dem Hohlkastenteil und dem Deckelteil aufgenommen ist. Die Befestigungsöse kann dabei von einem den Hohlkastenteil und den Deckelteil durchsetzenden Verbindungsbolzen fixiert sein.

Im Hinblick auf die bereits erwähnte Funktion als Spreitzsicherung ist es denkbar, daß der radial äußere Stecklappen mit Hinterschneidungen in Einsenkungen an der Außenseite der radial äußeren Begrenzungswand eingreift, derart, daß die Überbrückungslasche als Abspreitzsicherung gegen Abspreizen der radial äußeren Begrenzungswand von der radial inneren Begrenzungswand wirkt.

Um die Überbrückungslasche zum einem über den Bügel hinwegführen zu können und zum anderen die Überbrückungslasche in mittlerer Höhe des Hohlkastenteils ausreißsicher fixieren zu können wird vorgeschlagen, daß die Überbrückungslasche in einem mittleren Abschnitt zwischen der radial äußeren Begrenzungswand und der radial inneren Begrenzungswand eine einem Rundquerschnitt des Bügels angepaßte Krümmung besitzt.

Eine besonders aufbruchsichere Konstruktion ergibt sich dadurch, daß der Deckelteil längs wenigstens eines Teilbereiches seines bezüglich des Krümmungsmittelpunkts radial äußeren Randes einen Randflansch besitzt, welcher an der Innenseite der radial äußeren Begrenzungswand anliegt. Dabei kann die Aufbruchsicherheit auch im Bereich der Schloßkastenenden noch gesteigert werden, dadurch daß der Deckelteil im Bereich mindestens eines der Schloßkastenenden einen Endflansch besitzt, welcher an der Innenseite einer an dem Hohlkastenteil ausgebildeten Endwand anliegt.

Eine weitere Steifigkeitserhöhung kann dadurch erzielt werden, daß der Endflansch materialschlüssig mit einem Randflansch zusammenhängt.

Das Überbrückungselement kann zur zusätzlichen Sicherung der Schloßkastenteile gegen Trennung in Richtung der Teilringachse herangezogen werden, in der Weise, daß an dem Deckelteil nahe mindestens einem Schloßkastenende ein Hakenelement angebracht ist, welches das Überbrückungselement derart untergreift, daß es als zusätzliche Sicherung gegen Abheben des Deckelteils von dem Hohlkastenteil dient. Die Montage bleibt trotzdem einfach. Sie geht in der Weise vor sich, daß das Deckelteil zuerst mit seinem Hakenelement bzw. seinen Hakenelementen unter die Überbrückungslemente eingehakt wird und hierauf im Scheitelbereich in den Hohlkastenteil eingedrückt wird. Das Hakenelement bzw. die Hakenelemente können dabei Teil bzw. Teile eines Randflansches sein.

Zur Verbindung von Hohlkastenteil und Deckelteil im Bereich der radial inneren Begrenzungswand wird empfohlen, daß an der radial inneren Begrenzungswand in Abstand von der Bodenwand und in Umfangsrichtung zwischen dem Scheitelbereich und den Schloßkastenenden je ein zum Krümmungsmittelpunkt hin verlaufender Auflageflansch für den Deckelteil ausgebildet ist, wobei der Deckelteil mit diesen Auflageflanschen durch Verbindungsmittel verbunden ist.

Entsprechend der eingangs erwähnten Verwendungsart des Rahmenschlosses wird vorgeschlagen, daß an dem Schloßkasten Befestigungsmittel zur bleibenden Befestigung des Rahmenschlosses an einem Fahrzeugrahmen angebracht sind. Dabei können die Befestigungsmittel am Deckelteil in dessen Scheitelbereich angebracht sein. Diese Befestigungsmittel dienen dann insbesondere zur Befestigung im Scheitelbereich einer Hinterradgabel oberhalb des Hinterrads.

Alternativ ist es auch möglich, daß die Befestigungsmittel miteinander fluchtende Schlitze im Deckelteil und in an dem Deckelteil anliegenden Auflageflanschen des Hohlkastenteils aufweisen. Diese Befestigungsmittel sind besonders zur Befestigung des Rahmenschlosses an den Schenkeln der Hinterradgabel seitlich von der jeweiligen Felge bestimmt.

Die Betätigung des Bügels muß natürlich durch einen Schiebeschlitz hindurch erfolgen, der entsprechend dem Bügelweg zwischen Absperrstellung und Freigabestellung relativ lang ausgeführt sein muß. Um diesen Schiebeschlitz nicht zu einer Schwachstelle der ganzen Konstruktion werden zu lassen, ist bevorzugt eine Ausführungsform in Betracht gezogen, dergestalt, daß ein aus dem Schloßkasten herausgeführtes Verschiebeelement des Bügels unmittelbar an dem Deckelteil anliegend einen Schiebeschlitz durchsetzt, welcher zwischen dem im Bereich des Schiebeschlitzes ohne Randflansch ausgeführten Deckelteil und einer Längsaussparung der radial äußeren Begrenzungswand gebildet ist. Die Sicherheit gegen Aufbruchversuche im Bereich dieses Schiebeschlitzes kann dann insbesondere durch das weiter oben bereits erwähnte Hakenelement geschaffen werden, welches zwischen dem Schiebeschlitz und dem zugehörigen Schloßkastenende ein Überbrückungselement untergreift.

Wie an sich aus der DE-PS 25 19 068 bereits bekannt, ist es möglich, daß der Schließmechanismus in einem Schutzgehäuse, vorzugsweise aus gehärtetem Stahl, untergebracht ist, welches seinerseits innerhalb der Schließwerkskammer des Schloßkastens untergebracht ist. Dabei wird insbesondere eine Ausführungsform in Betracht gezogen dergestalt, daß das Schutzgehäuse mit einer an der Bodenwand des Hohlkastenteils anliegenden Sohlenwand und Seitenwänden ausgeführt ist, wobei eine der radial inneren Begrenzungswand des Hohlkastenteils nahe bogenförmige Seitenwand zusammen mit der radial inneren Begrenzungswand und der Bodenwand des Hohlkastenteils einen Führungskanal für den Bügel im schließwerknahen Bereich bildet. Durch diese Gestaltung wird insbesondere die im Stand der Technik gemäß der DE-OS 27 39 983.3-21 vorgeschriebene Ausbildung eines Durchgangskanals durch das Schutzgehäuse selbst vermieden, die zu einer komplizierten und kostspieligen Gestaltung des Schutzgehäuses geführt hat. Trotzdem wird ein hoher Sicherheitsgrad erzielt, weil nämlich der Bügel in der Absperrstellung als Schutz für die Eingriffsstelle zwischen dem Schließwerk und dem Bügel dient, so daß die Eingriffsklinke des Schließwerks, welche in eine Kerbe des Bügels an dessen radial äußerer Umfangsfläche eingreift, praktisch unzugänglich ist, obwohl sie entgegen der Vorschrift der DE-OS 27 39 983.3-21 aus dem Schutzgehäuse herausgeführt ist. Diese Eingriffsklinke ist dann zwar auch von der Bodenwand des Schloßkastens her zugänglich im Gegensatz zur bekannten Ausführungsform nach der DE-OS 27 39 983.3-21, etwa dann, wenn man die Bodenwand anbohrt. Diese Zugänglichkeit der Eingriffsklinke ist aber dann unschädlich, wenn entsprechend einem weiteren Vorschlag der Erfindung die Bewegungsrichtung der Eingriffsklinke eine solche ist, daß ein Druck durch eine Bohrstelle der Bodenwand hindurch zum Eingriff der Klinke in die Eingriffskerbe des Bügels führt, und wenn die Platzverhältnisse so eng bemessen sind, daß es nicht möglich ist, mit einem Zughaken durch die Bohrung der Bodenwand hindurch die Eingriffsklinke zu hintergreifen und aus der Eingriffskerbe des Bügels gewaltsam herauszuziehen.

Es gelingt also mit der Erfindung ohne Einschränkung des Sicherheitswerts die komplizierte Bauweise nach der DE-OS 27 39 983.3-21 mit einem Durchgangskanal durch das Schutzgehäuse zu vermeiden.

Ein Zugang zu der Eingriffsstelle zwischen Schließwerk und Bügel durch eine Bohrung im Deckelteil kann dadurch vermieden werden, daß das Schutzgehäuse durch einen Schutzgehäusedeckel abgedeckt ist, welcher dem Deckelteil des Schloßkastens naheliegt, und daß der Schutzgehäusedeckel einen Überstand über die bogenförmige Seitenwand besitzt, welcher den Führungskanal abdeckt. Alternativ ist es auch möglich, eine Sägeschutzplatte, welche am Deckelteil anliegend von der in der Absperrstellung geräumten Führungsrinne untergebracht ist, in Umfangsrichtung über den Führungskanal fortzusetzen. In diesem Fall kann auf den Deckelüberstand verzichtet werden, so daß die Konstruktion des Schutzgehäuses noch einfacher und kostengünstiger wird.

Die Verbindung von Hohlkastenteil und Deckelteil durch Hakenelemente, welche die Überbrückungselemente untergreifen, stellt einen besonders wichtigen Gesichtspunkt der Erfindung dar.

Ebenso stellt die Ausbildung des Schutzgehäuses einen besonders wichtigen Gesichtspunkt der Erfindung dar, wobei die Besonderheit hier insbesondere darin liegt, daß innerhalb der Schließwerkskammer, jedoch außerhalb des Schutzgehäuses ein Führungskanal für den Bügel gebildet ist, der gleichwohl Schutz gegen unbefugten Zugang zu der Eingriffsstelle zwischen Schließwerk und Bügel bietet, obwohl eine Verriegelungsklaue des Schließwerks aus dem Schutzgehäuse heraus an den Bügel herangeführt ist. In diesem Zusammenhang ist auch von wesentlicher Bedeutung, daß nach Aufbohren des Bodenteils des Hohlkastenteils eine Einwirkung auf die Verriegelungsklinke praktisch nur im Sinn einer Eingriffsherstellung oder Eingriffsverstärkung zwischen Verriegelungsklinke und Bügel möglich ist, so daß trotz der Zugänglichkeit der Verriegelungsklinke diese nicht im Sinne einer Freigabe des Bügels beeinflußt werden kann.

Die Erfindung wird im folgenden unter Bezug auf die beiliegenden Figuren näher erläutert. Es zeigt:
- Fig. 1: bei einem erfindungsgemäß ausgestaltbaren Ausführungsbeispiel eine Innenansicht des Hohlkastenteils, teilweise abgedeckt durch den Deckelteil, teilweise aufgebrochen mit eingebautem Bügel in dessen Absperrstellung;
- Fig. 1a: eine Ansicht der äußeren Begrenzungswand des Hohlkastenteils von Fig. 1 in Pfeilrichtung Ia-Ia;
- Fig. 1b: eine Ansicht der äußeren Begrenzungswand des Hohlkastenteils von Fig. 1 in Pfeilrichtung Ib-Ib der Fig. 1;
- Fig. 1c: eine vergrößerte Teilansicht entsprechend Fig. 1 an der Stelle Ic;
- Fig. 1d: einen Schnitt nach Linie Id-Id der Fig. 1 und 1c;
- Fig. 1e: eine Endansicht des Schloßkastenendes gemäß Pfeilrichtung Ie-Ie der Fig. 1 und 1c;
- Fig. 1f: eine Seitenansicht teilweise geschnitten nach Linie If-If der Fig. 1 nach Verbindung des Hohkastenteils mit dem Deckelteil;
- Fig. 2: eine Außenansicht des Deckelteils zum Hohlkastenteil der Fig. 1;
- Fig. 2a: eine Ansicht eines Randflansches des Deckelteils in Pfeilrichtung IIa-IIa der Fig. 2;
- Fig. 2b: eine Seitenansicht des Deckelteils gemäß Fig. 2 in Pfeilrichtung IIb-IIb der Fig. 2;
- Fig. 3: eine Innenansicht entsprechend Fig. 1 bei in Freigabestellung befindlichem Schließbügel;
- Fig. 3a: eine Endansicht in Pfeilrichtung IIIa-IIIa der Fig. 3;
- Fig. 3b: einen Schnitt nach Linie IIIb-IIIb der Fig. 3;
- Fig. 3c: einen Schnitt nach Linie IIIc-IIIc der Fig. 3;
- Fig. 4: eine Innenansicht des Hohlkastenteils nach Entnahme des Schließbügels entsprechend Fig. 1, jedoch mit eingebautem Schutzgehäuse für das Schließwerk und schematisch angedeutetem Schließwerk;
- Fig. 4a: einen Schnitt nach Linie IVa-IVa der Fig. 4;
- Fig. 4b: einen Schnitt nach Linie IVb-IVb der Fig. 4;
- Fig. 4c: einen Schnitt nach Linie IVc-IVc der Fig. 4;
- Fig. 5: eine Außenansicht des Deckels entsprechend Fig. 2 zur Erläuterung weiterer Schnittdarstellungen;
- Fig. 5a: einen Schnitt nach Linie Va-Va der Fig. 5;
- Fig. 5b: einen Schnitt nach Linie Vb-Vb der Fig. 5;

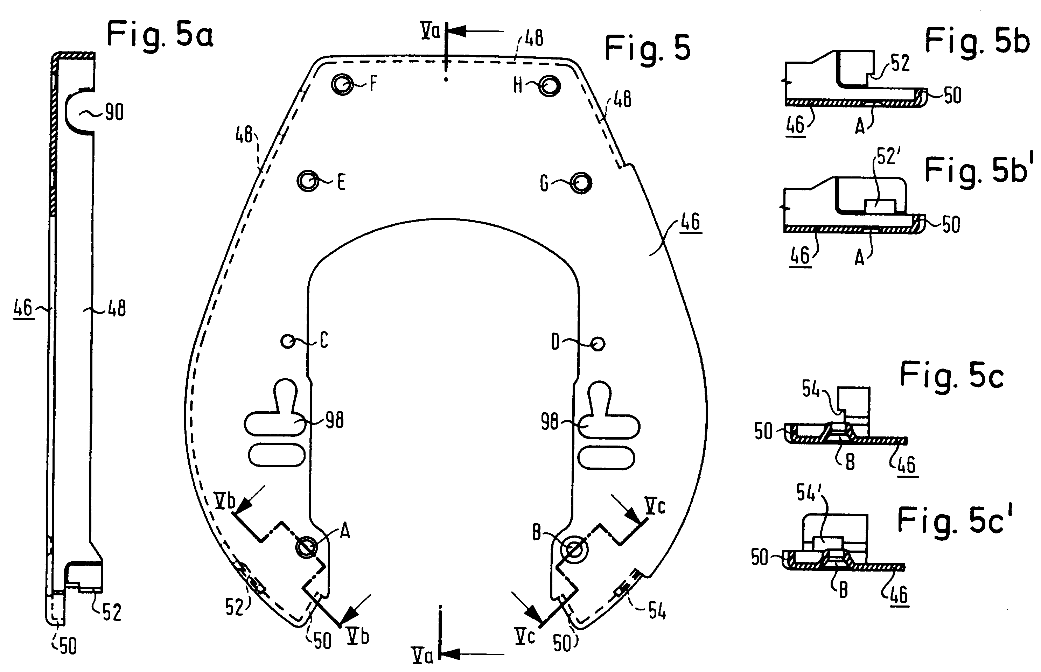

- Fig. 5b': eine Abwandlung zur Fig. 5b;
- Fig. 5c: einen Schnitt nach Linie Vc-Vc der Fig. 5;
- Fig. 5c': eine Abwandlung zur Fig. 5c;

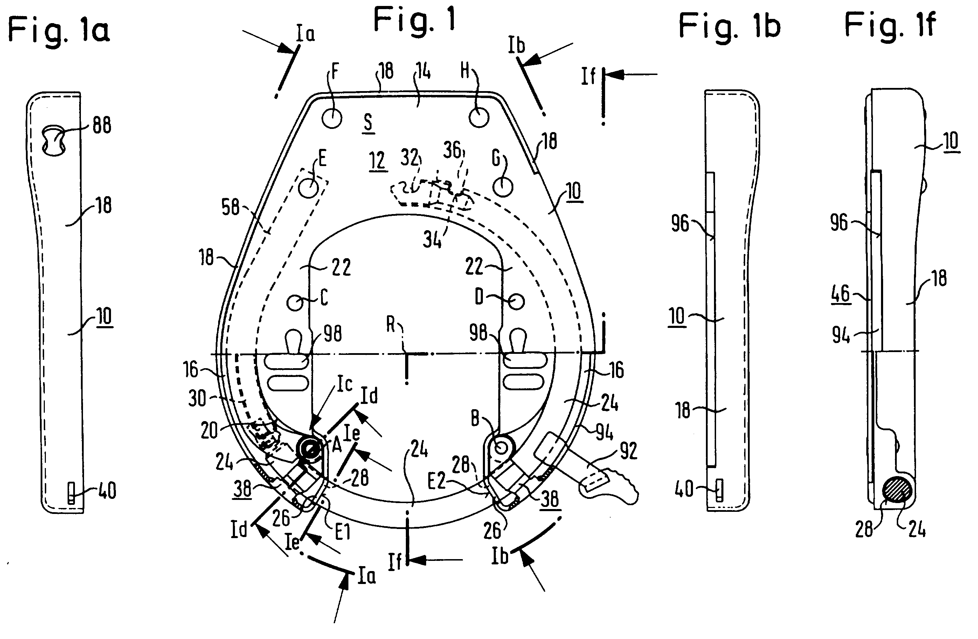

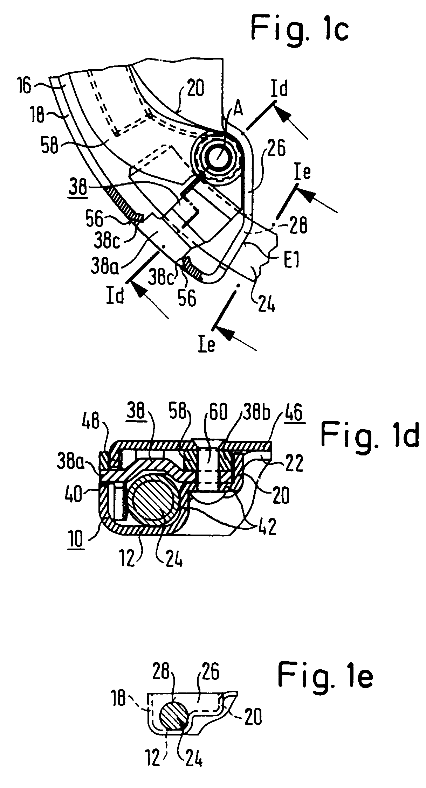

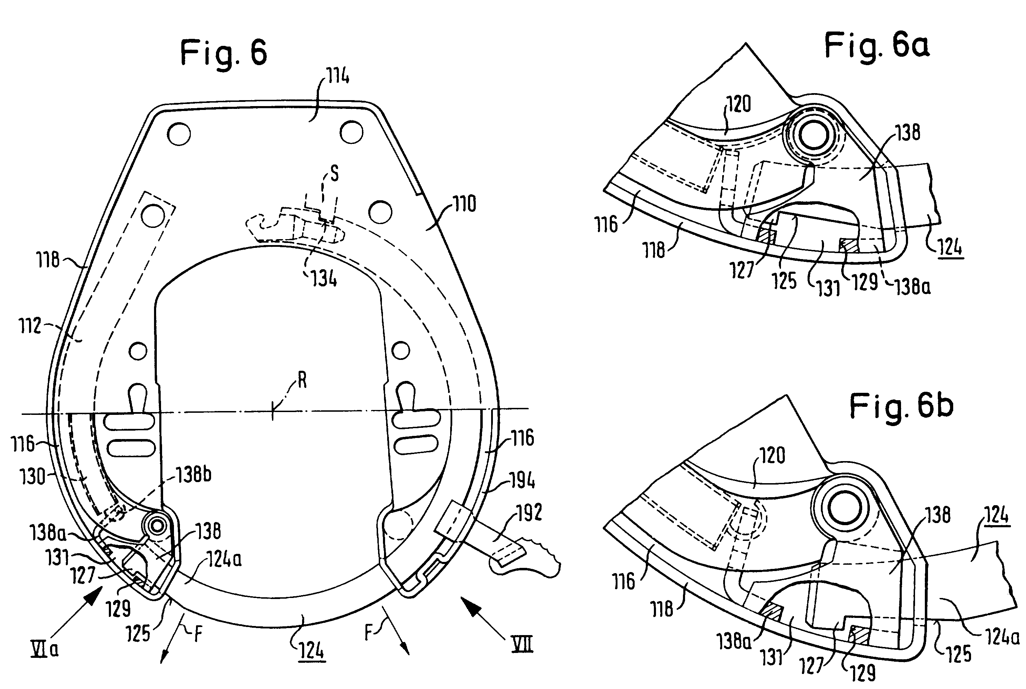

- Fig. 6: eine Innenansicht entsprechend Fig. 1 bei einer durch Modifikation des Ausführungsbeipiels der Fig. 1 erhaltenen, erfindungsgemäß ausgestalteten Ausführungsform;
- Fig. 6a: eine Detailansicht zu Fig. 6 an der Stelle VIa der Fig. 6, wobei sich der Bügel in Absperrstellung befindet und das Schloß frei von Belastung ist;
- Fig. 6b: eine Ansicht entsprechend Fig. 6a, wobei das Rahmenschloß einer Belastung unterworfen ist, die zu seinem Aufbruch führen soll;

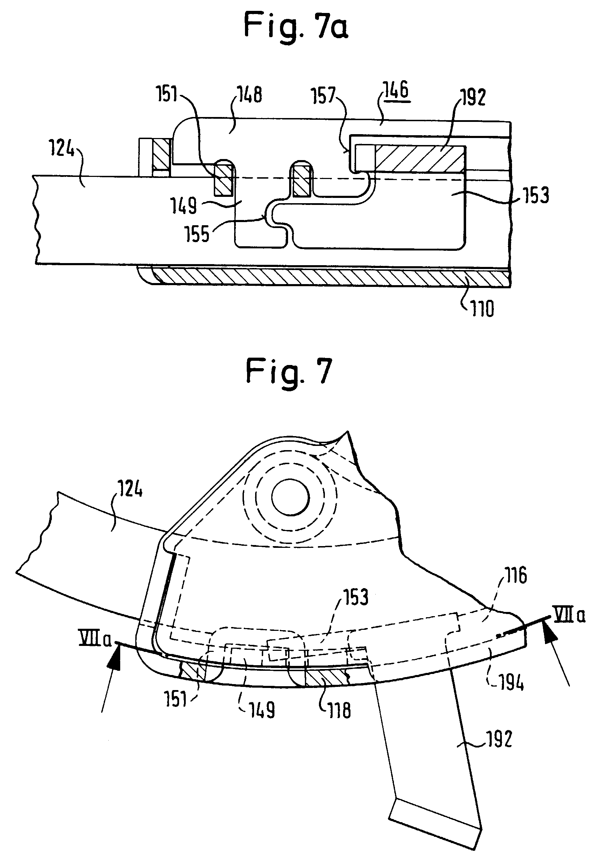

- Fig. 7: eine Einzelheit bei VII der Fig. 6;
- Fig. 7a: einen Schnitt nach Linie VIIa-VIIa der Fig. 7 und

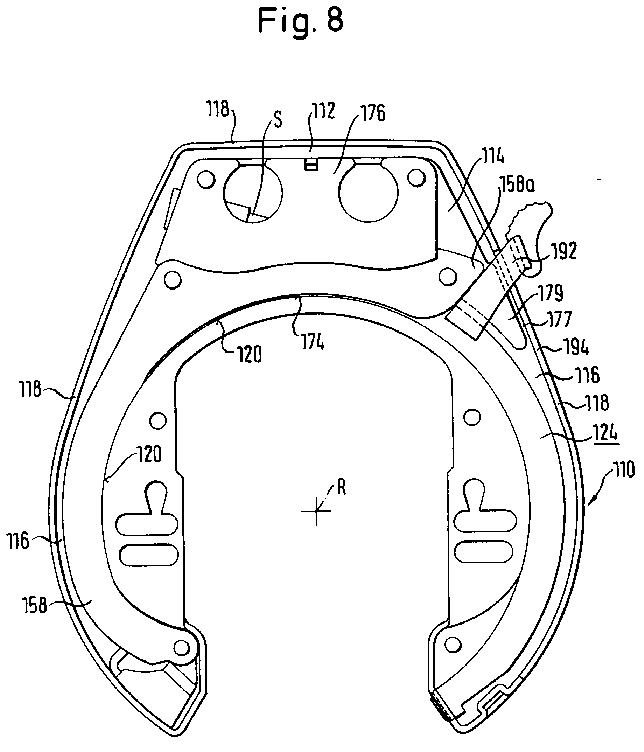

- Fig. 8: eine Innenansicht bei einer abgewandelten Ausführungsform.

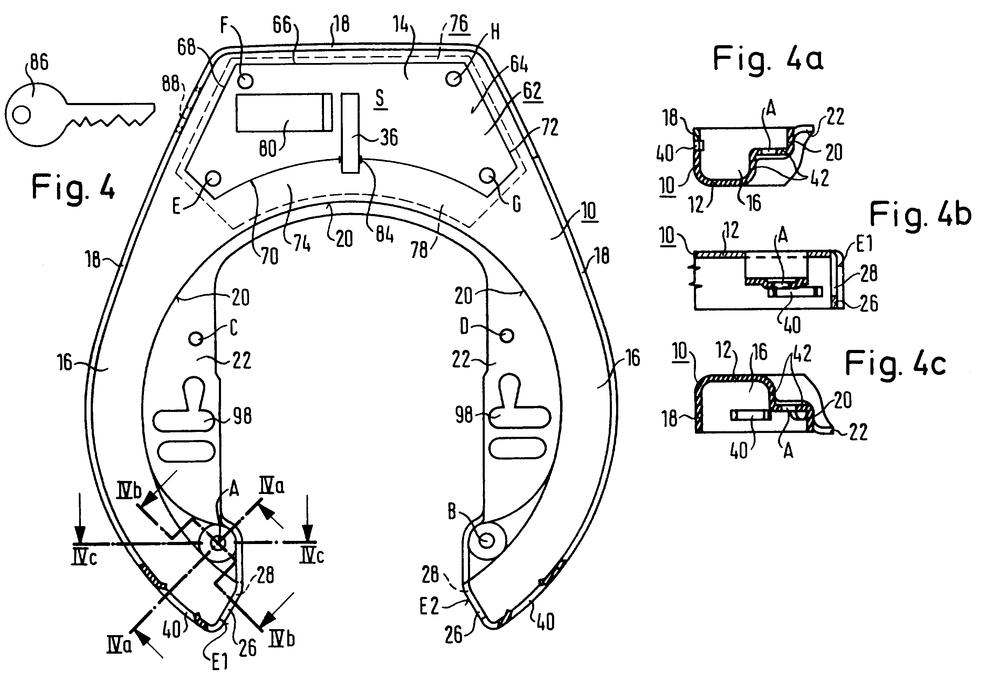

In Fig. 1 ist ein Hohlkastenteil ganz allgemein mit 10 bezeichnet. Dieser Hohlkastenteil umfaßt wie insbesondere auch aus Fig. 4 hervorgeht, einen Bodenteil 12, der sich auf annähernd konstantem Niveau durch eine Schließwerkskammer 14 und angrenzend an diese über Führungsrinnen 16 erstreckt. Der Hohlkastenteil 10 ist in bezug auf den Ringmittelpunkt R nach radial außen durch eine radial äußere Begrenzungswand 18 begrenzt, die sich über dem Bodenteil 12 erhebt und nach radial innen durch eine radial innere Begrenzungswand 20, die sich ebenfalls über dem Bodenteil 12 erhebt. An die radial innere Begrenzungswand 20 schließen sich, wie aus Fig. 1 und 4 ersichtlich, Auflageflansche 22 an, die zur Auflage eines Deckelteils bestimmt sind, auf den noch einzugehen sein wird.

Die Führungsrinnen 16 und die Schließwerkskammer 14 sind also nach radial außen durch die äußere Begrenzungswand 18 und nach radial innen durch die innere Begrenzungswand 20 begrenzt und in den Fig. 1 und 4 zunächst nach oben offen. In den Hohlkastenteil 10 ist ein Bügel 24 eingelegt, der durch die Führungsrinnen 16 geführt ist. In Fig. 1 befindet sich der Bügel 24 in seiner Schließstellung, in welcher er die Enden El und E2 des Hohlkastenteils 10 überbrückt.

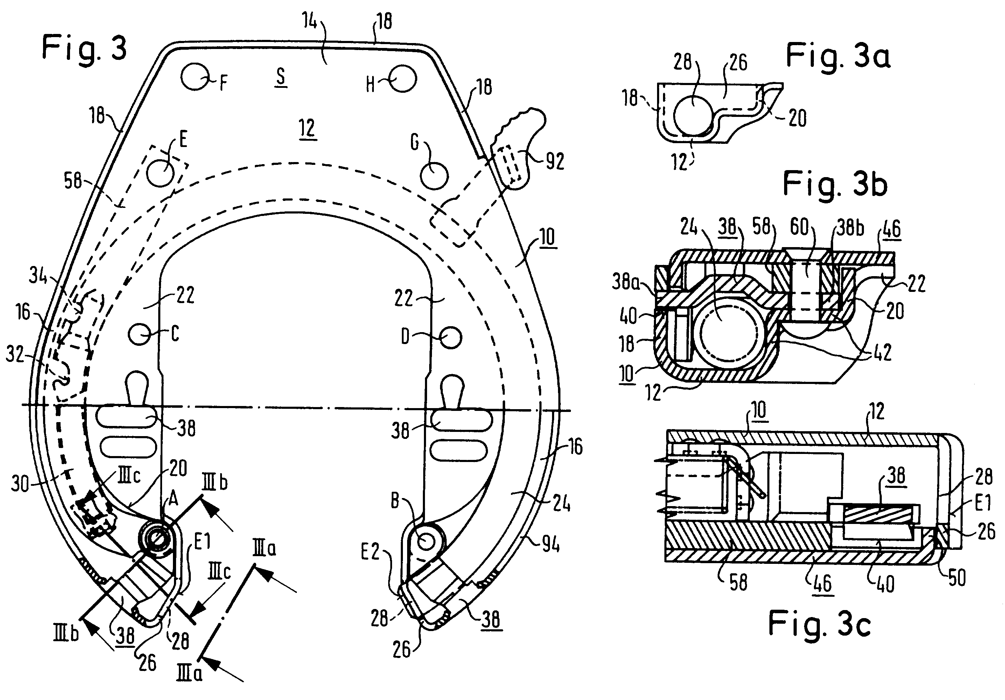

Gemäß Fig. 3 befindet sich der Bügel 24 in seiner Freigabestellung, in welcher die Schloßkastenenden El und E2 die Speichen eines mit dem Schloß ausgerüsteten Rads frei durchgehen lassen.

Besondere Beachtung verdient folgendes: Die Führungsrinnen 16 sind im Bereich der Schloßkastenenden E1 und E2 durch Endwände 26 abgeschlossen, die man insbesondere in Fig. 1 und Fig. le erkennt. Diese Endwände 26 erstrecken sich annähernd über die volle Höhe der Begrenzungswand 18 und 20, so daß der Hohlkastenteil 10 als ein allseitig seitlich begrenzter und insbesondere auch an den Enden E1 und E2 begrenzter Teilringtopf zu verstehen ist. Die Endwände 26 sind von Durchgängen 28 durchsetzt, durch welche der Bügel 24 hindurchtreten kann. Wie aus Fig. 3 ersichtlich, durchsetzt in der Freigabestellung der Bügel 24 gerade noch die Durchgangsöffnung 28 der rechten Endwand 26. In der Absperrstellung gemäß Fig. 1 greift der Bügel 24 auch durch die Durchgangsöffnung 28 der linken Endwand 26 hindurch in das Innere des Schloßkastens ein.

Eine in der linken Führungsrinne 16 aufgenommene Schraubenzugfeder 30 ist mit dem Bügel 24 in einem Haken 32 verbunden und versucht den Bügel 24 in der Freigabestellung gemäß Fig. 3 zu halten. An dem Bügel 24 ist eine Verriegelungskerbe 34 angebracht, welche in der Absperrstellung gemäß Fig. 1 eine Verriegelungsklinke 36 eines Schließwerks S aufnimmt, das in der Schließwerkskammer 14 untergebracht, aber nur durch das Bezugszeichen S ohne zeichnerische Darstellung symbolisiert ist.

Im Bereich der Schloßkastenenden El, E2 ist die Führungsrinne 16 von einem Überbrückungselement 38 überbrückt (siehe insbesondere Fig. 1, 1c und 1d). Dieses Überbrückungselement 38 ist von einer Überbrückungslasche gebildet. Diese Überbrückungslasche besitzt im Bereich der äußeren Begrenzungswand 18 einen Stecklappen 38a, welcher in einen Steckschlitz 40 der äußeren Begrenzungswand 18 eingesteckt ist. An ihrem anderen Ende im Bereich der inneren Begrenzungswand 20 besitzt die Überbrückungslasche eine Befestigungsöse 38b. Diese Befestigungsöse 38b liegt auf einem Stufenplateau 42 auf, welches an der inneren Begrenzungswand 20 ausgebildet ist. Der Mittelbereich der Überbrückungslasche 38 ist ausgewölbt und liegt an dem Bügel 24 berührend oder mit engem Abstand an.

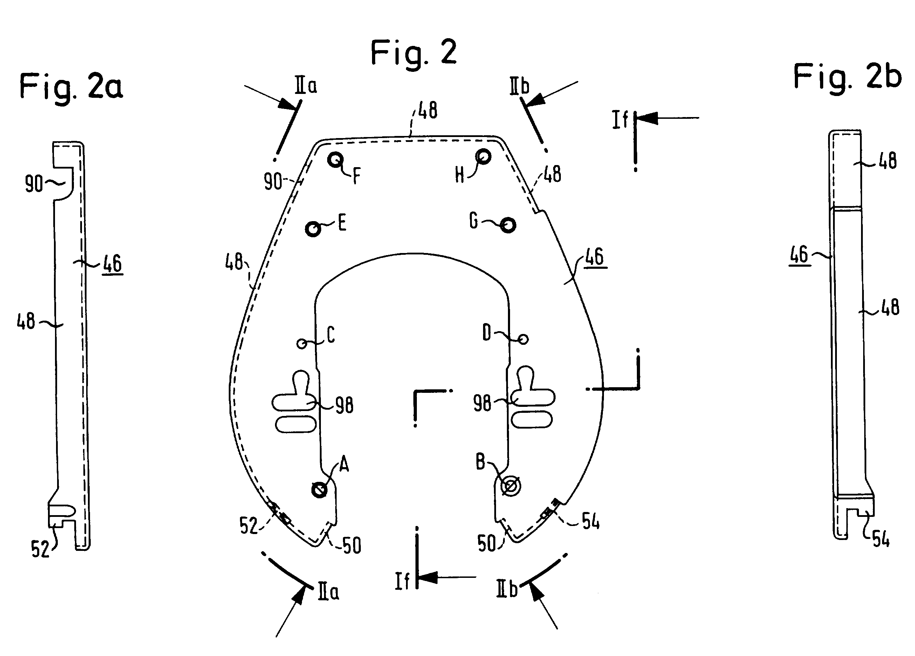

Der Hohlkastenteil 10 ist mit einem Deckelteil 46 verbunden (Fig. 2). Dieser Deckelteil 46 besitzt einen Randflansch 48. Dieser Randflansch 48 liegt im zusammengebautem Zustand des Schloßkastens an der radial äußeren Begrenzungswand 18 überlappend an (siehe insbesondere Fig. 1d). An den Randflansch 48 schließen sich Endflansche 50 an, die im zusammengebauten Zustand an den Endwänden 26 des Hohlkastenteils 10 anliegen. Die Endflansche 50 gehen materialeinheitlich in den Randflansch 48 über, sind also nicht als vereinzelte Lappen zu verstehen. Sie sind gemeinsam mit dem Randflansch 48 durch Tiefziehen des Deckelteils 46 hergestellt. An dieser Stelle muß noch einmal auf die Ausbildung des Hohlkastenteils 10 zurückgegangen werden: Auch dort hängen die Endwände 26 materialeinheitlich mit den äußeren und inneren Begrenzungswänden 18 bzw. 20 zusammen und sind zusammen mit diesen durch Tiefziehen einer den Hohlkastenteil 10 bildenden Blechplatine hergestellt.

Der Deckelteil 46 ist weiter mit Hakenelementen 52 und 54 ausgeführt, die insbesondere in den Fig. 2a und 2b zu erkennen sind. Das Hakenelement 52 ist dabei in Fortsetzung des Randflansches 48 ausgebildet, während das Hakenelement 54 aus später noch zu erörternden Gründen als Einzelelement ausgebildet ist. Bei der Montage des Deckelteils 46 auf dem Hohlkastenteil 10 werden zunächst die Überbrückungselemente 38 in die Position gebracht, die aus den Fig. 1, 1c und 1d zu ersehen ist. Es wird also der Stecklappen 38a in den Steckschlitz 40 eingesteckt und es wird die Befestigungsöse 38b auf das Stufenplateau 42 aufgelegt. Dabei ist noch zu erwähnen, daß der Stecklappen 38a, wie aus Fig. 1c zu ersehen, mit Hinterschneidungsvorsprüngen 38c ausgeführt ist, welche an Einsenkungen 56 (siehe Fig. 1d) anliegen, so daß der Stecklappen 38a nicht durch den Steckschlitz 40 hindurchrutschen kann, wenn er sich in seiner Betriebsposition befindet. Ein Einführen des Stecklappens 38a in den Steckschlitz 40 von innen her ist trotzdem möglich und zwar durch Schrägstellung des Überbrückungselements 38. Nach Durchführung wird dann das Überbrückungselement 38 in die Betriebsposition gemäß Fig. 1c und ld verschwenkt.

Beim Anlegen des Deckels werden nun zunächst dessen Hakenelement 52 und 54 unter die Überbrückungselemente 38 eingehakt. Anschließend wird der Deckel 46 mit seinem der Schließwerkskammer 14 zugehörigen Bereich gegen den Hohlkastenteil 10 geklappt, so daß der Randflansch 48 auf seiner ganzen Länge an der Innenseite der äußeren Begrenzungswand 18 zur Anlage kommt.

Es versteht sich, daß vorher der Bügel 24 und die Teile des Schließwerks S in den Hohlkastenteil 10 eingelegt worden sind und daß auch die Feder 30 eingelegt worden ist.

An dieser Stelle ist nun auch noch auf eine Sägeschutzplatte 58 hinzuweisen, welche insbesondere in Fig. 1 und 1d zu erkennen ist. Diese Sägeschutzplatte 58 ist entsprechend dem Verlauf der linken Führungsrinne 16 gekrümmt und überdeckt die Schraubenzugfeder 30 und den Bügel 24 (sofern sich dieser in der Freigabestellung befindet) innerhalb der Führungsrinne 16.

Wie aus Fig. 1d zu ersehen, liegt die Sägeschutzplatte 58 an dem Deckelteil 46 einerseits und an der Befestigungsöse 38b des Überbrückungselements 38 an.

Der Deckelteil 46 kann nunmehr durch Befestigungsniete oder dergleichen mit dem Hohlkastenteil 10 verbunden werden. Es werden hierzu Nieten, insbesondere an den Stellen A, B, C, D, E, F, G, H gesetzt, die teilweise auch Abstandsfunktion zwischen den Schloßkastenteilen 10 und 46 übernehmen, dort nämlich, wo die Schloßkastenteile etwa zur Bildung der Schließwerkskammer 14 Abstand voneinander haben.

Die an den Stellen A und B gesetzten Niete (siehe Niet 60 in Fig. 1d) verbinden dabei sandwichartig das Stufenplateau 42, die Befestigungsöse 38b, die Sägeschutzplatte 58 und den Deckelteil 46. Die an den Stellen C und D zu setzenden Nieten verbinden den Deckelteil 46 mit den unmittelbar an ihm anliegenden Auflageflanschen 22 des Hohlkastenteils 10. Die an den Stellen E, F, G, und H zu setzenden Niete halten den Bodenteil 12 des Hohlkastenteils 10 und den Deckelteil 46 auf Abstand und verhindern gleichzeitig deren Trennung voneinander. Außerdem dienen die an den Stellen E, F, G und H zu setzenden Niete zur Festlegung eines in Fig. 4 eingezeichneten Schutzgehäuses 62. Dieses Schutzgehäuse 62 ist mit einem Sohlenteil 64 und mit Seitenwänden 66, 68, 70 und 72 ausgeführt, die gegenüber dem Sohleteil 64 nach oben umgeklappt sind. Der Sohlenteil 64 liegt dabei im Bereich Schließwerkskammer 14 an dem Bodenteil 12 des Hohlkastenteils 10 an. Die Seitenwand 70 ist entsprechend der Krümmung der inneren Begrenzungswand 20 im Schließkammerbereich 14 gekrümmt, so daß zwischen der Seitenwand 70 und der radial inneren Begrenzungswand 20 ein gekrümmter Durchgangskanal 74 für den Bügel 24 gebildet ist. Das Schutzgehäuse 62 ist durch einen in Fig. 4 gestrichelt eingezeichneten Schutzgehäusedeckel 76 abgedeckt. Dieser Schutzgehäusedeckel 76 weist einen Überstand 78 auf, welcher den Durchgangskanal 74 überdeckt. Der Durchgangskanal 74 befindet sich also außerhalb des Schutzgehäuses 62 und innerhalb des Schloßkastens. Das Schließwerk ist in Fig. 4 wiederum mit S bezeichnet und symbolisiert durch ein Zylinderschloß 80 und eine Verriegelungsklinke 36. Die Verriegelungsklinke 36 greift durch eine Öffnung 84 der Seitenwand 70 hindurch und dringt in die Verriegelungskerbe 34 (Fig. 1) ein. Die Sägeschutzplatte 58 gemäß Fig. 1 liegt in einer Ebene mit dem Deckelüberstand 78 und schließt an diesen dicht an. Durch den Deckelüberstand 78 ist der Zugang zu der Verriegelungsklinke 36 erschwert. In Fig. 4 erkennt man wiederum die Nietpositionen E, F, G und H in denen die Schloßkastenteile 10 und 46 miteinander verbunden und gleichzeitig das Schließwerksgehäuse fixiert ist. Die Nieten an den Stellen E, F, G und H können in ihrem Mittelabschnitt verdickt sein, so daß sie den Schutzgehäusedeckel 76 und den Sohlenteil 62 des Schutzgehäuses auf Abstand halten.

Das Schließwerk ist durch einen Schlüssel 86 zu bedienen, welche durch ein Schlüsselloch 88, der radial äußeren Begrenzungswand 18 und eine Kerbe 90 des Randflansches 48 in den Schließzylinder 80 einführbar ist. Die Verriegelungsklinke 36 ist so ausgebildet, daß sie im Fall einer Anbohrung des Bodenteils 12 (siehe Fig. 1) unterhalb der Klinke 36 von einem durch den Bodenteil 12 eingeführten Werkzeug nur in Richtung auf den Deckelteil 46 hingedrückt werden kann, dabei aber nicht aus der Verriegelungskerbe 34 ausgerückt werden kann, in dem nämlich die Verriegelungsklinke 36 gegen den Rand der Öffnung 84 anstößt. Somit ist auch ein derartiger Aufbruchversuch vereitelt. Obwohl die Verriegelungsklinke 36 durch die Schutzgehäusewand 70 hindurch in einen durch das Schutzgehäuse 62 ungeschützten Raum hineinragt, ist eine unbefugte Öffnung des Schließwerks und damit des Bügels unterbunden.

Der Bügel 24 ist, wie aus Fig. 1 zu ersehen, mit einem Handgriff 92 zu versehen, welcher der Verschiebung des Bügels 24 aus der Freigabestellung gemäß Fig. 3 ind die Absperrstellung gemäß Fig. 1 dient. Der Handgriff 92 ist nahe der Führungsrinne 16 an dem Bügel 24 befestigt und durchdringt einen Schlitz 94, der wie aus Fig. lf zu ersehen, unmittelbar angrenzend an den Deckelteil 46 durch eine längliche Aussparung 96 der äußeren Begrenzungswand 18 gebildet ist.

Dieser Schlitz ist trotz seiner Länge für die Sicherheit unschädlich, weil am Ende dieses Schlitzes das Hakenelement 54 (siehe Fig. 2b) das zugehörige Überbrückungselement 38 (siehe Fig. 1) untergreift und ein Absprengen des Deckelteils 46 von dem Hohlkastenteil 10 unmöglich macht.

Die Nietstellen F und H können auch zur Aufnahme von Befestigungsmittel dienen, z.B. zur Aufnahme von Gewindebolzen, welche eine Verklemmung oder Verschraubung des Schlosses mit der Hinterradgabel eines Fahrzeugs, etwa an einem Pletschersteg gestatten. Weiterhin sind in dem Deckelteil 46 und in den Auflageflanschen 22 Befestigungsschlitze 98 vorgesehen, die am fertig montierten Schloßkasten in Deckung liegen. Mit Hilfe dieser Schlitze 98 kann der Schloßkasten seitlich der jeweiligen Radfelge an den Schenkeln einer Hinterradgabel befestigt werden.

In den Fig. 5b und 5c erkennt man die Hakenelemente 52 und 54 wieder, die bereits erörtert worden sind. Die Fig. 5b' und 5c' lassen erkennen, daß diese Hakenelemente 52 und 54 auch zu geschlossenen Steckschlitzen 52' und 54' ausgebaut werden können.

In Fig. 6 sind analoge Teile mit den gleichen Bezugszeichen versehen wie in Fig. 1, vermehrt um die Zahl 100. Man erkennt bei dieser erfindungsgemäß ausgestalteten Ausführungsform, daß an dem Endabschnitt 124a des Bügels 124 durch eine sägezahnförmige Ausnehmung 125 ein Nocken 127 gebildet ist, welcher eine Nockeneingriffskante 129 an der äußeren Begrenzungswand 118 hintergreift. Die Nockeneingriffskante 129 ist durch eine Ausnehmung 131 in dem Überbrückungselement 138 gebildet; dabei ist die Ausnehmung 131 in einem Randlappen 138a des Überbrückungselements 138 vorgesehen, welcher an der radial äußeren Begrenzungswand 118 anliegt.

An dem Überbrückungselement 138 ist bei der hier beschriebenen Ausführungsform im Gegensatz zur Ausführungsform nach Fig. 1 auch ein Haken 138b angeformt, an welchem die Schraubenzugfeder 130 verankert ist.

Im normalen Betrieb des Rahmenschlosses, d.h., wenn sowohl der Bügel 124 als auch der Hohlkastenteil 110 von äußeren Kräften unbelastet sind, geht der Nocken 127, wie in Figur 6a dargestellt, unbehindert an der Eingriffskante 129 und der Ausnehmung 131 vorbei. In Figur 6a ist die Absperrstellung des Bügels 124 dargestellt, die durch das Zusammenwirken des Schließmechanismus S mit der Verriegelungskerbe 134 des Bügels 124 bestimmt ist.

Wenn der Schließmechanismus gelöst wird, so bewegt sich der Bügel 124 unter der Wirkung der Schraubenzugfeder 130 in die Freigabestellung, wobei auch bei dieser Bewegung der Nocken 127 ungehindert an der Eingriffskante 129 vorbeigeht.

Wenn aber nun von einem Unbefugten, welcher das Schloß aufbrechen will, an den Bügel 124 Kräfte F angelegt werden, wie sie in Fig. 6 eingezeichnet sind, so führt dies zu einer Verformung des Bügels 124 und ggf. auch des Hohlkastenteils 110, so daß sich der Zustand gemäß Fig. 6b einstellt, wobei immer noch das Schließwerk S in Eingriff mit der Verriegelungskerbe 134 gemäß Figur 6 steht. Dieser Eingriff zwischen der Eingriffskante 129 und dem Nocken 127 verhindert, daß der Bügel 124 aus dem Führungskanal 116 herausgezogen wird und verhindert auch, daß die Eingriffsstelle S-134 überlastet wird. Die Sicherheit gegen Aufbrechen ist damit erhöht.

In Fig. 6 ist das Rahmenschloß in Schließstellung dargestellt, so daß sich der Handgriff 192 im unteren Endbereich des Schlitzes 194 befindet. Dieser Zustand ist im einzelnen in Fig. 7 und 7a dargestellt. Um nun den Zusammenhalt zwischen dem Deckelteil 146 und dem Hohlkastenteil 110 noch zu unterstützen, ist der Randflansch 148 des Deckelteils 146, wie insbesondere aus Fig. 7a zu ersehen, einstückig mit einem Hakenfortsatz 149 ausgeführt, wobei dieser Hakenfortsatz 149 durch eine Lasche 151 hindurchgesteckt ist, welche durch eine Eindrückung in der radial äußeren Begrenzungswand 118 gebildet ist. Das untere Ende dieses Hakenfortsatzes 149 steht im Eingriff mit einem Winkelhaken 153 des Handgriffs 192, wenn sich der Handgriff 192 in der Stellung gemäß Fig. 1 befindet, also in der Absperrstellung des Bügels 124. Damit ist der Deckelteil 146 an der Eingriffsstelle 155 gegen Abheben gesichert, wobei eine Abhebekraft von der Lasche 151 aufgenommen werden kann, so daß auch der Bügel 124 und mit ihm der Handgriff 192 nicht aus dem Hohlkastenteil 110 ausgehoben werden kann. Eine zweite Eingriffsstelle 157 zwischen dem Hakenfortsatz 149 und dem Winkelhaken 153 sorgt zusätzlich für den Zusammenhalt zwischen dem Deckelteil 146 und dem Hohlkastenteil 110.

In Fig. 8 erkennt man den Schutzgehäusedeckel 176 wieder, der bereits im Zusammenhang mit Fig. 4 beschrieben worden ist und der Abdeckung eines in Fig. 8 nicht gezeichneten, das Schließwerk einschließenden Schutzgehäuses dient (das Schutzgehäuse ist in Fig. 4 mit 62 bezeichnet). Abweichend von der Ausführungsform der Fig. 4 ist aber nun der Schutzgehäusedeckel 176 nach radial einwärts verkürzt (Wegfall des Deckelüberstands 78 der Figur 4). Um den Durchgangskanal 174 gleichwohl vor Ansägeversuchen zu schützen, ist die aus Figur 1 bereits bekannte Sägeschutzplatte 158 über den Umfangsbereich des Durchgangskanals 174 hinweg verlängert.

Das abgewinkelte Ende 158a der Sägeschutzplatte 158 dient als Anschlag für den Handgriff in dessen Freigabestellung, die in Fig. 8 dargestellt ist. Damit ist die Lage des Bügels 124 in der Freigabestellung eindeutig festgelegt, weil der Handgriff 192 durch die Wirkung der Feder 130 gegen den Anschlag 158a gezogen wird.

Man erkennt in Fig. 8 weiter, daß sich der Abstand zwischen dem Bügel 124 und der radial äußeren Begrenzungswand 118 am Übergang von dem Führungskanal 116 zu der Schließwerkskammer 114 zu einem Freiraum 177 erweitert. Da dieser Freiraum von dem Handgriff 192 durchsetzt wird, wird dieser Freiraum 177 von dem Schlitz 194 angeschnitten. Es könnte deshalb versucht werden, mit einem spitzen Instrument durch den Schlitz 194 in den Freiraum 117 einzufahren und mit diesem Instrument sodann den Bügel 124 zu untergreifen und aus der Führungsrinne 116 auszuhebeln. Um dem entgegenzuwirken, ist der Freiraum 177 mit einem Formstück 179 gefüllt, so daß ein Einführen eines Instruments verhindert, jedenfalls aber erschwert ist. Das Formstück 179 liegt unterhalb des Handgriffs 192.

Die Sägeschutzplatte 158 und ggf. auch das Formstück 179 sind aus gehärtetem Stahl hergestellt, so daß ein Ansägen und Anbohren erschwert ist. Ebenso kann der Schutzgehäusedeckel 176, wie auch das ganze Schutzgehäuse, gehärtet sein.

## Patentansprüche

1. Rahmenschloß für Fahrzeuge, insbesondere Zweiradfahrzeuge, mit einem in der Ansicht teilringförmigen Schloßkasten (110,146) und einem in dem Schloßkasten verschiebbaren, ebenfalls teilringförmigen Bügel (124), welcher in einer Freigabestellung im wesentlichen innerhalb des Schloßkastens liegt und in einer Absperrstellung die Schloßkastenenden überbrückt, wobei in dem Schloßkasten (110,146) neben dem Bügel ein Schließwerk (S) untergebracht ist, welches in.Absperrstellung des Bügels (124) mit einem Sperreingriff (134) des Bügels (124) diesen sperrend zusammenwirkt, und wobei der Schloßkasten (110,146) durch zwei in Richtung der Teilringachse (R) aneinander anschließende teilringförmige Kastenteile (110,146) gebildet ist, welche zwischen sich eine Schließwerkskammer (114) und anschließend an diese Schließwerkskammer gekrümmte Führungskanäle (116) für den Bügel (124) begrenzen,
**dadurch gekennzeichnet,**
daß an einem bei der Überführung in die Absperrstellung vorlaufenden Endabschnitt (124a) des teilringförmigen Bügels (124) einerseits und dem diesen Endabschnitt (124a) in der Absperrstellung aufnehmenden Führungskanal (116) andererseits Eingriffsformationen (127,129) angeordnet sind, welche bei normaler Bewegung des Bügels (124) zwischen Absperrstellung und Freigabestellung ungehindert aneinander vorbeigehen, im Falle einer äußeren Belastung (F) des in Absperrzustand befindlichen Rahmenschlosses jedoch derart in Eingriff treten, daß sie einem Ausziehen des Endabschnitts (124a) aus dem ihn aufnehmenden Führungskanal (116) entgegenwirken.

2. Rahmenschloß nach Anspruch 1,
**dadurch gekennzeichnet,**
daß die Eingriffsformationen (127,129) einerseits an der radial äußeren Seite des Endabschnitts (124a) und andererseits an einer radial äußeren Begrenzungswand (118) des Führungskanals (116) angeordnet sind.

3. Rahmenschloß nach Anspruch 2,
**dadurch gekennzeichnet,**
daß eine bügelseitige Eingriffsformation (127) von einem nach radial außen vorspringenden Nocken (127) am Endabschnitt (124a) des Bügels (124) und eine führungskanalseitige Eingriffsformation (129) von einer Nockeneingriffskante (129) gebildet ist.

4. Rahmenschloß nach Anspruch 3,
**dadurch gekennzeichnet,**
daß der nach radial außen vorspringende Nocken (127) durch eine Sägezahnausnehmung (125) in dem Bügelendabschnitt (124a) gebildet ist.

5. Rahmenschloß nach einem der Ansprüche 3 und 4,
**dadurch gekennzeichnet,**
daß die Nockeneingriffskante (129) durch eine den Nocken unter Belastung aufnehmende Senke (131) an der Innenseite der radial äußeren Begrenzungswand (118) gebildet ist.

6. Rahmenschloß nach einem der Ansprüche 1 bis 5,
**dadurch gekennzeichnet,**
daß eine führungskanalseitige Eingriffsformation (129) an einem Überbrückungselement (138) ausgebildet ist, welches sich zwischen der radial äußeren Begrenzungswand (118) und einer radial inneren Begrenzungswand (120) des Führungskanals (116,146) erstreckt und an dem Führungskanal (116,146) zumindest in dessen Umfangsrichtung festgelegt ist.

## Claims

1. A frame lock for vehicles, especially two-wheeled vehicles, comprising a lock case (110, 146) in the form of part of a ring in appearance and a shackle (124) which is likewise in the form of part of a ring and displaceable in the lock case, which shackle (124) lies substantially within the lock case when in a release position and spans the lock case ends when in a locking position, a lock mechanism (S) being accommodated in the lock case (110, 146) in addition to the shackle, which lock mechanism (S), when the shackle (124) is in the locking position, interacts with a locking catch (134) of the shackle (124), locking the latter, and the lock case (110, 146) being formed of two case parts (110, 146) in the form of parts of a ring and adjoining each other in the direction of the partial ring axis (R), which case parts (110, 146) define between them a locking mechanism chamber (114) and curved guide channels (116) adjoining this locking mechanism chamber for the shackle (124), characterized in that catch systems (127, 129) are arranged on the one hand at one end portion (124a) of the shackle (124) in the form of part of a ring and on the other hand at the guide channel (116) accommodating this end portion (124a) in the locking position, which catch systems (127, 129) move past each other unhindered during normal movement of the shackle (124) between locking position and release position but, in the case of external loading (F) of the frame lock when it is in the locked state, enter into engagement in such a way that they prevent the end portion (124a) from being extracted from the guide channel (116) accommodating it.

2. A frame lock according to claim 1, characterized in that the catch systems (127, 129) are arranged on the radially outer side of the end portion (124a) on the one hand and on a radially outer defining wall (118) of the guide channel (116) on the other hand.

3. A frame lock according to claim 2, characterized in that a catch system (127) on the shackle comprises a cam (127) projecting radially outwards on the end portion (124a) of the shackle (124) and a catch system (129) on the guide channel comprises a cam engagement edge (129).

4. A frame lock according to claim 3, characterized in that the radially outwardly projecting cam (127) is formed of a saw-tooth reccess (125) in the shackle end portion (124a).

5. A frame lock according to either one of claims 3 and 4, characterized in that the cam engagement edge (129) is formed of a depression (131) in the inside of the radially outer defining wall (118), which depression (131) accommodates the cam under load.

6. A frame lock according to any one of claims 1 to 5, characterized in that a catch system (129) on the guide channel is constructed on a spanning member (138) which extends between the radially outer defining wall (118) and a radially inner defining wall (120) of the guide channel (116, 146) and is fixed to the guide channel (116, 146) at least in the circumferential direction thereof.

## Revendications

1. Serrure d'encerclement pour véhicules, en particulier véhicules à deux roues, comportant un boîtier de serrure (110, 146) de forme en partie d'anneau, vu de face, et un étrier (124) également de forme en partie d'anneau, pouvant coulisser dans le boîtier de serrure, qui dans une position de dégagement se trouve sensiblement à l'intérieur du boîtier de serrure et dans une position de blocage, réunit les extrémités du boîtier de serrure, dans le boîtier de serrure (110, 146), à côté de l'étrier, étant logé un mécanisme de fermeture (S), qui en position de blocage de l'étrier (124) coopère avec un engagement de blocage (134) de l'étrier (124) bloquant celui-ci, et le boîtier de serrure (110, 146) étant formé par deux parties de boîtier (110, 146) en forme de partie d'anneau se rattachant l'une à l'autre dans la direction de l'axe (R) de la partie d'anneau, parties de boîtier qui délimitent entre elles une chambre de mécanisme de fermeture (114) et, se rattachant à cette chambre de mécanisme de fermeture, des canaux de guidage (116) courbés pour l'étrier (124),
caractérisée
en ce que sur une portion d'extrémité (124a), venant en premier lors du passage dans la position de blocage, de l'étrier (124) en forme de partie d'anneau d'une part et le canal de guidage (116), logeant cette partie d'extrémité (124a) dans la position de blocage, d'autre part, sont prévues des formations d'engagement (127, 129), qui en cas de déplacement normal de l'étrier (124), passent librement l'une devant l'autre entre la position de blocage et la position de dégagement, mais en cas de sollicitation extérieure (F) de la serrure d'encerclement, se trouvant en position de blocage, viennent en prise de manière à s'opposer à une extraction de la portion d'extrémité (124a) hors du canal de guidage (116) la logeant.

2. Serrure d'encerclement selon la revendication 1,
caractérisée
en ce que les formations d'engagement (127, 129) sont placées d'une part sur le côté radialement extérieur de la portion d'extrémité (124a) et d'autre part sur une paroi de délimitation (118) radialement extérieure du canal de guidage (116).

3. Serrure d'encerclement selon la revendication 2,
caractérisée
en ce qu'une formation d'engagement (127) côté étrier est formée par une came (127), faisant saillie radialement vers l'extérieur sur la portion d'extrémité (124a) de l'étrier (124) et une formation d'engagement (129), côté canal de guidage, est formée par une arête d'engagement de came (129).

4. Serrure d'encerclement selon la revendication 3,
caractérisée
en ce que la came (127) faisant saillie radialement vers l'extérieur est formée par un évidement en dent de scie (125) ménagé dans la portion d'extrémité d'étrier (124).

5. Serrure d'encerclement selon l'une des revendications 3 et 4,
caractérisée
en ce que l'arête d'engagement de came (129) est formée par une dépression (131), logeant la came sous charge, ménagée sur le côté intérieur de la paroi de délimitation (118) radialement extérieure.

6. Serrure d'encerclement selon l'une des revendications 1 à 5,
caractérisée
en ce qu'une formation d'engagement (129) côté canal de guidage est formée sur un élément entretoise (138), qui s'étend entre la paroi de délimitation (118) radialement extérieure et une paroi de délimitation (120) radialement intérieure du canal de guidage (116, 146) et est fixé sur le canal de guidage (116, 146), au moins dans sa direction périphérique.
